# EUROPEAN PATENT APPLICATION

(11) **EP 4 802 946 A1**
(43) Date of publication of application: **09.09.2026**
(21) Application number: 26161075.2
(22) Date of filing: 26.02.2026
(51) Int. Cl.: A43D 1/00

(54) **METHOD FOR DEVELOPING A FOOTWEAR ARTICLE**

(30) Priority: 03.03.2025 TW 114107665
(71) Applicant: Pou Chen Corporation, Chang Hwa Hsien 506 (TW)
(72) Inventor: LIU, Chia-Hua, 506 Chang Hwa Hsien (TW); LIN, Keng-Yang, 414 Taichung City (TW); TSAI, Meng-Chieh, 807 Kaohsiung City (TW); CHEN, Chih-Lung, 612 Taibao City (TW); SANG, Jui, 812 Kaohsiung City (TW)
(74) Representative: Page White Farrer

(57) **Abstract**

A method for developing a footwear article is implemented by a computing unit. The computing unit receives a foot scan model (2) corresponding to an external shape of a foot, a set of feature point parameters, and a set of comfort parameters. A preliminary digital model (6) of the footwear article is calculated and generated based on the foot scan model (2), the set of feature point parameters, and the set of comfort parameters. An external shape of the preliminary digital model (6) of the footwear article is modified, and a microstructure (8) is added to the preliminary digital model (6) of the footwear article for enhancing support, thereby generating a modified digital model (5) of the footwear article.

## Description

The disclosure relates to a footwear article, and more particularly to a method for developing a footwear article.

An increasing number of users wear corrective insoles to alleviate foot pain whether due to congenital or acquired conditions. The external shape of a corrective insole is typically fabricated based on an evaluation conducted by a physical therapist. However, conventional corrective insoles generally provide only a single template. If, after fabrication, the insole does not fit into the user's footwear, or if an existing corrective component needs to be adjusted or an additional corrective component is to be added, multiple design modifications and/or grinding adjustments of the conventional insole are required, which may be time-consuming.

According to an aspect of the disclosure, there is provided a method for developing a footwear article according to claim 1.

Other features and advantages of the disclosure will become apparent in the following detailed description of the embodiment(s) with reference to the accompanying drawings. It is noted that various features may not be drawn to scale.
FIG. 1 is a perspective schematic view of a foot scan model and a plantar digital model in accordance with some embodiments of a method for developing a footwear article according to the disclosure.
FIG. 2 is a perspective schematic view of the plantar digital model and a footwear template digital mode in accordance with some embodiments, wherein the plantar digital model and the footwear template digital model are not yet aligned.
FIG. 3 is a perspective schematic view of a digital model of the footwear article in accordance with some embodiments, shown from another viewing angle.
FIG. 4 is a flow chart of the method for developing the footwear article in accordance with some embodiments.
FIG. 5 is a perspective schematic view of a preliminary digital model of the footwear article in accordance with some embodiments.
FIG. 6 is a flow chart illustrating steps of generating the preliminary digital model of the footwear article in accordance with some embodiments.
FIG. 7 is a perspective schematic view similar to FIG. 2, where the plantar digital model and the footwear template digital model are aligned.
FIG. 8 is a right-side perspective view illustrating a condition before an upper contour line of the footwear template digital model is repositioned.
FIG. 9 is a right-side perspective view similar to FIG. 8, illustrating a condition after the upper contour line of the footwear template digital model is repositioned.
FIG. 10 is a perspective schematic view similar to FIG. 7, illustrating a condition after the upper contour line of the footwear template digital model is repositioned and a central surface of the plantar digital model is extracted.
FIG. 11 is a perspective schematic view similar to FIG. 10, illustrating a condition where the upper contour line of the footwear template digital model is divided into three regions, and a portion of the upper contour line corresponding to a rear heel region is projected onto a reference plane.
FIG. 12 is a perspective schematic view similar to FIG. 11, illustrating a condition where the portion of the upper contour line corresponding to the rear heel region is moved upward by a footwear rearfoot opening height after being projected onto the reference plane.
FIG. 13 is a perspective schematic view similar to FIG. 12, illustrating a condition where a footwear opening line is formed.
FIG. 14 is a perspective schematic view similar to FIG. 13, illustrating a footwear shell model in accordance with some embodiments.
FIG. 15 is a perspective schematic view of the footwear shell model shown from another viewing angle, illustrating a condition where a bottom the footwear shell model has not yet been closed.
FIG. 16 is a perspective schematic view similar to FIG. 15, illustrating a condition where the bottom of the footwear shell model has been closed.
FIG. 17 is a perspective schematic view similar to FIG. 16, illustrating a condition where the footwear shell model after a rounding operation has been performed.
FIG. 18 is a flow chart illustrating steps of generating the digital model of the footwear article in accordance with some embodiments.
FIG. 19 is a perspective schematic view similar to FIG. 5, illustrating a condition where the preliminary digital model of the footwear article after a shell-thinning operation and removal of a bottom portion.
FIG. 20 is a perspective schematic view similar to FIG. 19, illustrating a condition where the preliminary digital model of the footwear article is hollowed.
FIG. 21 is a perspective schematic view of a microstructure illustrating that the microstructure is formed by a combination of structural lines.
FIG. 22 is a perspective schematic view of the microstructure according to another embodiment, illustrating that the microstructure is formed by a combination of surface-based structural elements.
FIG. 23 is a perspective schematic view of the digital model of the footwear article in accordance with some embodiment, illustrating a condition where a mounting box structure is additionally provided.

Before the disclosure is described in greater detail, it should be noted that where considered appropriate, reference numerals or terminal portions of reference numerals have been repeated among the figures to indicate corresponding or analogous elements, which may optionally have similar characteristics.

It should be noted herein that for clarity of description, spatially relative terms such as "top," "bottom," "upper," "lower," "on," "above," "over," "downwardly," "upwardly" and the like may be used throughout the disclosure while making reference to the features as illustrated in the drawings. The features may be oriented differently (e.g., rotated 90 degrees or at other orientations) and the spatially relative terms used herein may be interpreted accordingly.

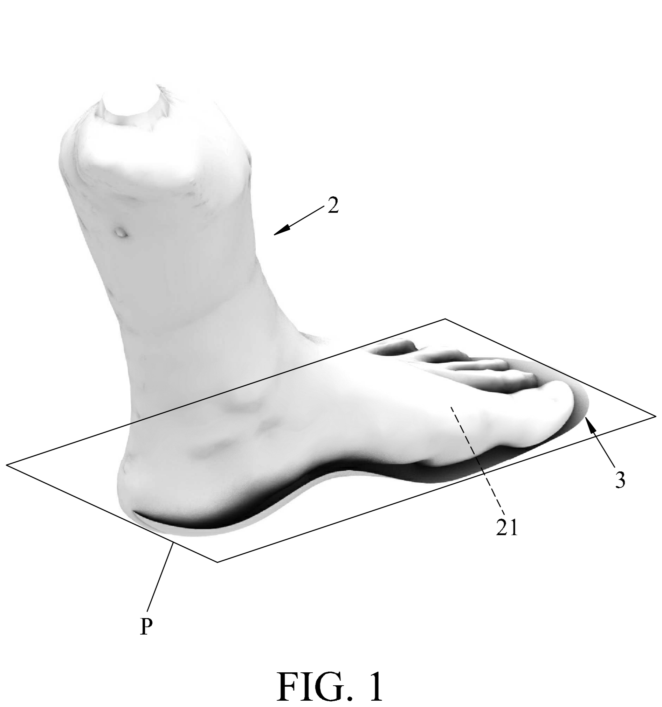

Referring to FIGS. 1 to 3, an embodiment of a method for developing a footwear article according to this disclosure is adapted to use a computing unit to generate a plantar digital model 3 and a footwear template digital model 4 based on a foot scan model 2, a set of feature point parameters, and a set of comfort parameters, and further to produce a digital model 5 of the footwear article. In this embodiment, the computing unit may be a computer. The digital model 5 of the footwear article has an external shape corresponding to an external shape of an insole. Subsequently, a physical insole may be manufactured based on the digital model 5 of the footwear article by three-dimensional (3D) printing techniques, such as selective laser sintering (SLS). However, the present disclosure is not limited to such, and other 3D printing techniques, such as stereolithography (SLA), liquid crystal display-based photopolymerization (LCD), digital light processing (DLP), or fused deposition modeling (FDM), may also be employed. In addition, the external shape of the digital model 5 of the footwear article may alternatively correspond to an external shape of a midsole, such that a physical midsole may be manufactured by 3D printing, such as selective laser sintering.

The foot scan model 2 is generated by using a foot scanner to scan one foot of a user who is in a seated posture, and producing a scan file corresponding to an external shape of the foot. The foot scanner scans the foot of the user after the user's foot is aligned using two laser level instruments (not shown), and a foot scan model 2 is obtained. One of the laser level instruments is aligned with a second metatarsal of the foot, and the other laser level instrument is aligned with a central axis of a heel of the foot, thereby improving scanning accuracy. In this embodiment, the foot scan model 2 includes a forefoot portion 21, and corresponds to a left foot of the user. After being generated, the foot scan model 2 may be uploaded to a cloud database (not shown) for subsequent use.

The set of feature point parameters includes a rearfoot medial feature point and a rearfoot lateral feature point respectively corresponding to opposite sides of a rear heel portion of the foot, a heel feature point corresponding to a posterior protrusion of the heel, an arch feature point corresponding to a navicular bone of the foot, a first metatarsal feature point corresponding to a first metatarsal of the foot, and a fifth metatarsal feature point corresponding to a fifth metatarsal of the foot. The feature points in the set of feature point parameters may be manually selected by medical personnel (e.g., a physical therapist) based on the foot scan model 2, and may be uploaded to the cloud database for subsequent use.

The set of comfort parameters includes a footwear style parameter, a footwear material type parameter, a forefoot hardness parameter, a midfoot hardness parameter, a rearfoot hardness parameter, a transverse arch pad type parameter, a transverse arch pad protrusion height parameter, a transverse arch pad lateral displacement parameter, a transverse arch pad axial displacement parameter, a rearfoot medial-lateral wedge angle parameter, a medial arch height parameter, a lateral arch height parameter, a foot-medial sidewall height parameter, a foot-lateral sidewall height parameter, a rearfoot elevation height parameter, and an overall footwear elevation height parameter.

The footwear style parameter and the footwear material type parameter respectively correspond to an external shape and a material of the footwear template digital model 4. The forefoot hardness parameter, the midfoot hardness parameter, and the rearfoot hardness parameter respectively correspond to hardness of forefoot, midfoot, and rearfoot portions of the digital model 5 of the footwear article. The transverse arch pad type parameter, the transverse arch pad protrusion height parameter, the transverse arch pad lateral displacement parameter, and the transverse arch pad axial displacement parameter correspond to an external shape related to a transverse arch pad portion of the plantar digital model 3. The rearfoot medial-lateral wedge angle parameter corresponds to a medial-lateral inclination angle of a rearfoot portion of the plantar digital model 3. The medial arch height parameter, the lateral arch height parameter, the foot-medial sidewall height parameter, and the foot-lateral sidewall height parameter correspond to a peripheral height of the plantar digital model 3. The rearfoot elevation height parameter corresponds to a relative elevation of a rear heel portion of the plantar digital model 3 with respect to a forefoot portion of the plantar digital model 3. The overall footwear elevation height parameter corresponds to an additional thickness adjustment to a thickness defined by the footwear style parameter of the footwear template digital model 4. Each parameter of the set of comfort parameters may be manually selected by a medical professional based on the foot scan model 2 and uploaded to the cloud database for subsequent use.

Referring to FIGS. 1, 2 and 4, the embodiment of the method for developing a footwear article according to this disclosure includes steps S1 to S4.

In step S1, the computing unit receives, from the cloud database, the foot scan model 2 corresponding to the external shape of the foot, and the set of feature point parameters corresponding to the foot scan model 2.

In step S2, the computing unit receives the set of comfort parameters corresponding to the foot scan model 2 from the cloud database.

Referring to FIGS. 1, 4 and 5, in step S3, the computing unit calculates and generates a preliminary digital model 6 of the footwear article based on the foot scan model 2, the set of feature point parameters, and the set of comfort parameters.

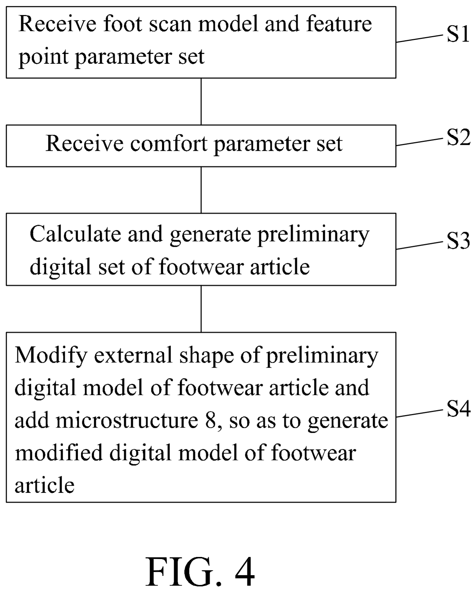

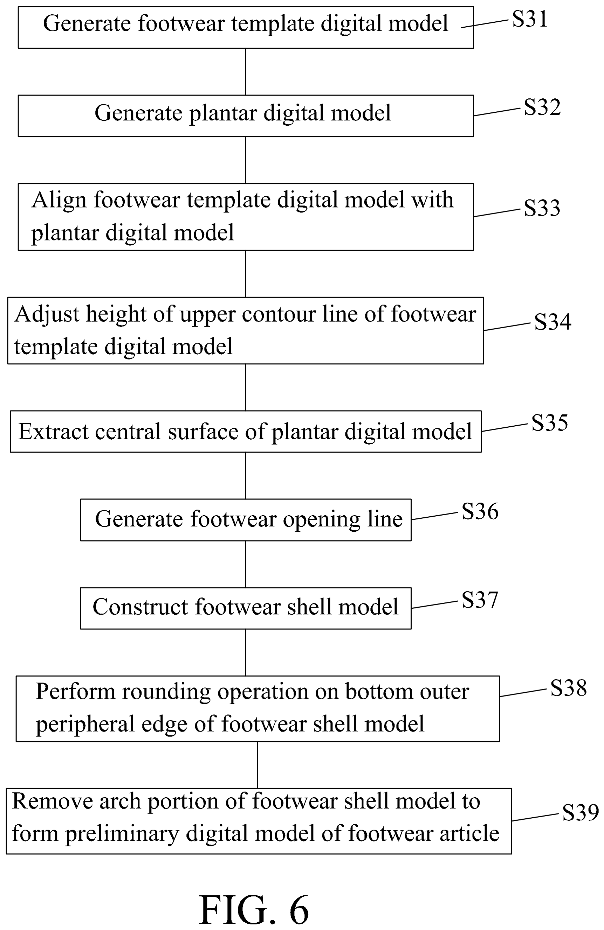

Referring to FIGS. 4 and 6, step S3 includes sub-steps S31 to S39.

Referring to FIGS. 1, 2 and 6, in sub-step S31, the computing unit generates a footwear template digital model 4 based on the set of comfort parameters. The footwear template digital model 4 includes a footbed region 41 corresponding to a stepping area of the forefoot portion 21, an upper contour line 42 disposed above the footbed region 41, and a lower contour line 43 disposed below the footbed region 41. In this embodiment, the computing unit generates the footwear template digital model 4 based on the footwear style parameter and the overall footwear elevation height parameter. In some embodiments, the computing unit may generate the footwear template digital model 4 based on only the footwear style parameter or the overall footwear elevation height parameter.

In sub-step S32, the computing unit generates a plantar digital model 3 corresponding to a region below the foot scan model 2 based on the foot scan model 2 and the set of comfort parameters. The plantar digital model 3 includes a footbed region 31 corresponding to the stepping area of the forefoot portion 21 and being coplanar with the footbed region 41 of the footwear template digital model 4 along a reference plane P, and a contour line 32. In this embodiment, the computing unit generates the plantar digital model 3 that corresponds to the region below the foot scan model 2 based on the foot scan model 2, the transverse arch pad type parameter, the transverse arch pad protrusion height parameter, the transverse arch pad lateral displacement parameter, the transverse arch pad axial displacement parameter, the rearfoot medial-lateral wedge angle parameter, the medial arch height parameter, the lateral arch height parameter, the foot-medial sidewall height parameter, the foot-lateral sidewall height parameter, and the rearfoot elevation height parameter, thereby accommodating a broader range of corrective needs. In some embodiments, the computing unit may generate the plantar digital model 3 based on one or some of the abovementioned parameters, and the disclosure is not limited in this respect. In some embodiments, the computing unit first generates a preliminary plantar digital model corresponding to the region below the foot scan model 2 based on the parameters other than the rearfoot medial-lateral wedge angle parameter. The computing unit then modifies the preliminary plantar digital model into the plantar digital model 3 according to the rearfoot medial-lateral wedge angle parameter. Specifically, the computing unit may extract a cross-sectional contour line of the preliminary plantar digital model corresponding to a rearfoot portion, maintain height positions of two ends of the cross-sectional contour line so that their height positions are unchanged, and rotate the cross-sectional contour line according to the rearfoot medial-lateral wedge angle parameter. The rotated cross-sectional contour line is then smoothly connected to the height positions at the two ends to form a new cross-sectional contour line. Finally, the new cross-sectional contour line is used as a contour line of the plantar digital model 3 extending from the rearfoot portion to an arch portion, and is smoothly extended forward to form the plantar digital model 3.

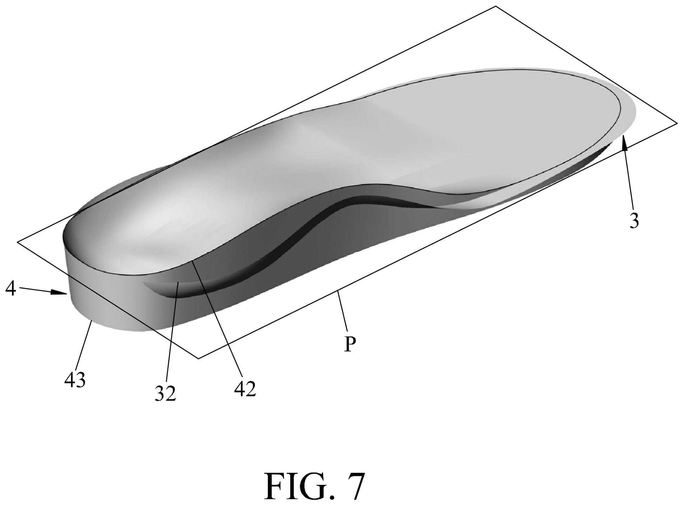

Referring to FIGS. 6 and 7, in sub-step S33, the computing unit translates the footwear template digital model 4 and the plantar digital model 3 along the reference plane P such that positions corresponding to heel feature points of the footwear template digital model 4 and the plantar digital model 3 coincide with each other when projected onto the reference plane P, thereby completing alignment between the footwear template digital model 4 and the plantar digital model 3.

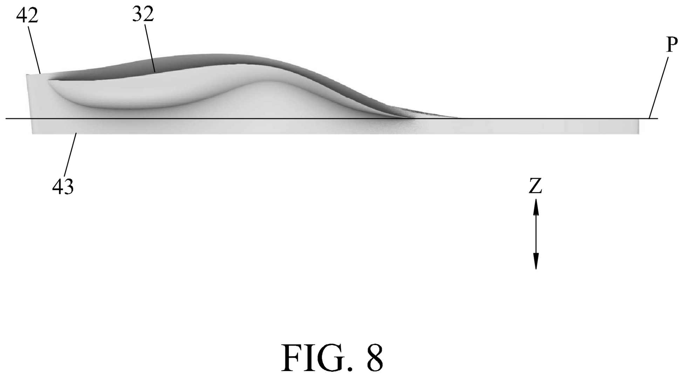

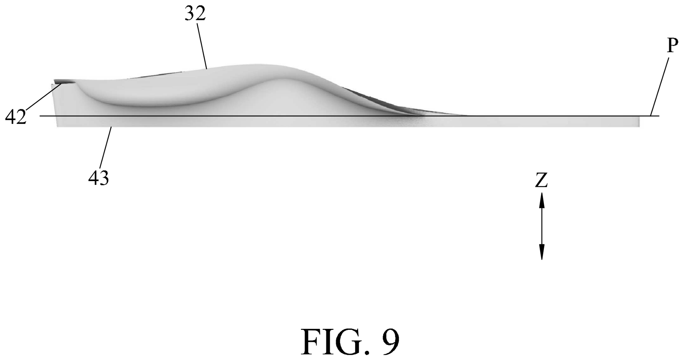

Referring to FIGS. 6, 8 and 9, in sub-step S34, the computing unit adjusts a position of the upper contour line 42 of the footwear template digital model 4 corresponding to the arch feature point by moving the position downward along a vertical direction Z, such that a distance between the position thus adjusted and the reference plane P along the vertical direction Z is a predetermined proportion of a distance between a position of the contour line 32 of the plantar digital model 3 corresponding to the arch feature point and the reference plane P along the vertical direction Z. After the adjustment, the computing unit determines whether a distance between the upper contour line 42 of the footwear template digital model 4 and the reference plane P along the vertical direction Z falls within an adjustment height range. When the distance falls within the adjustment height range, the upper contour line 42 is maintained at the adjusted position. When the distance does not fall within the adjustment height range, the computing unit further adjusts the upper contour line 42 along the vertical direction Z such that the distance between the upper contour line 42 and the reference plane P along the vertical direction Z falls within the adjustment height range (see FIG. 9). During the position-adjusting process, the lower contour line 43 of the footwear template digital model 4 remains unchanged, and the upper contour line 42 is adjusted in a manner where the height of the upper contour line 42 is proportionally scaled as a whole relative to the reference plane P. In this embodiment, the predetermined proportion ranges from 30% to 70%, and the adjustment height range is from 10 mm to 30 mm.

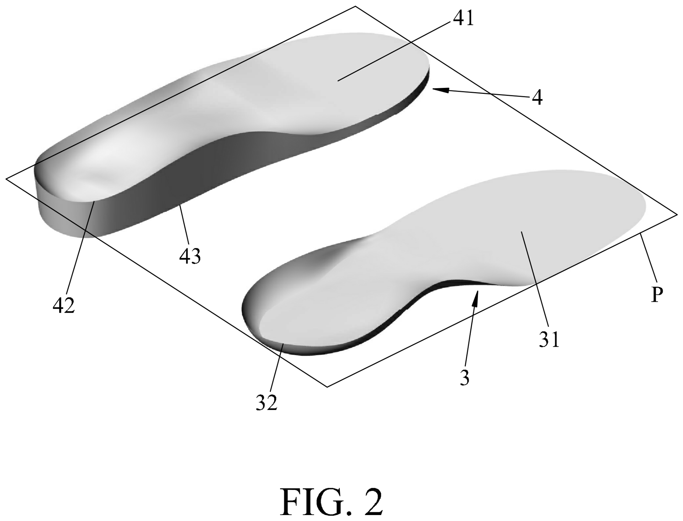

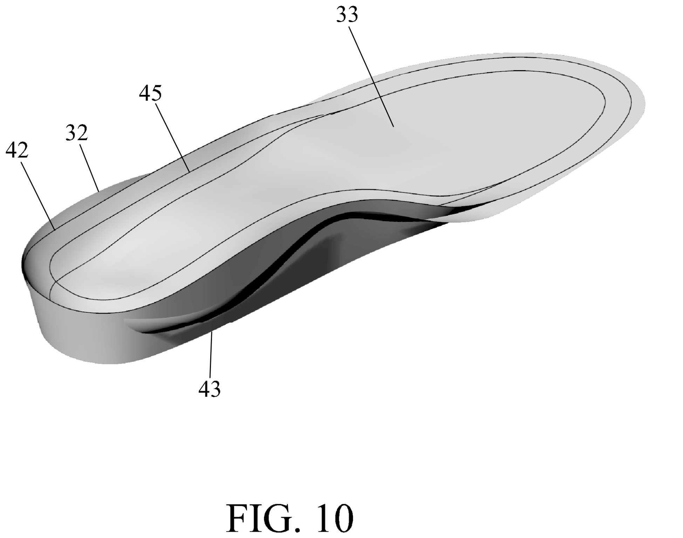

Referring to FIGS. 2, 6 and 10, in sub-step S35, the computing unit offsets the upper contour line 42 of the footwear template digital model 4 thus adjusted inward by a predetermined reduction distance, uses the upper contour line 42 thus offset as a shaping line 45, and designates a region of the plantar digital model 3 extracted in correspondence to the shaping line 45 as a central surface 33 of the plantar digital model 3. The predetermined reduction distance is related to a size of the footwear template digital model 4. The smaller the size of the footwear template digital model 4, the smaller the predetermined reduction distance. In this embodiment, the predetermined reduction distance refers to a reduction distance resulting from reducing an area enclosed by the upper contour line 42 of the footwear template digital model 4 by 5% to 15%.

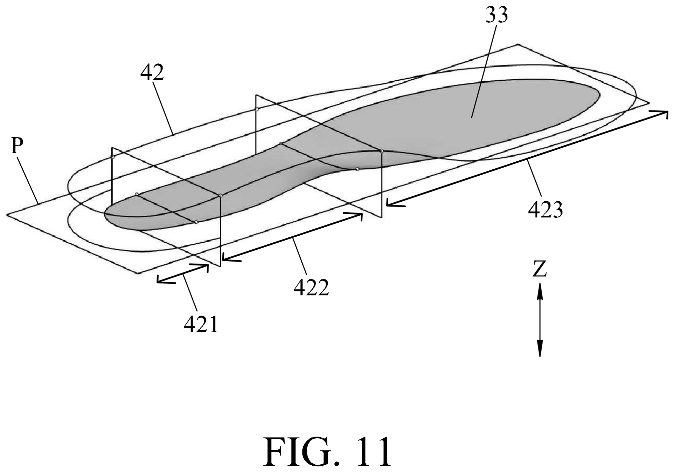

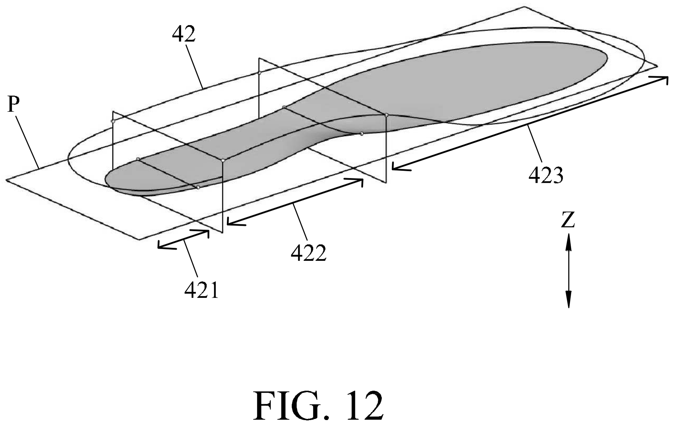

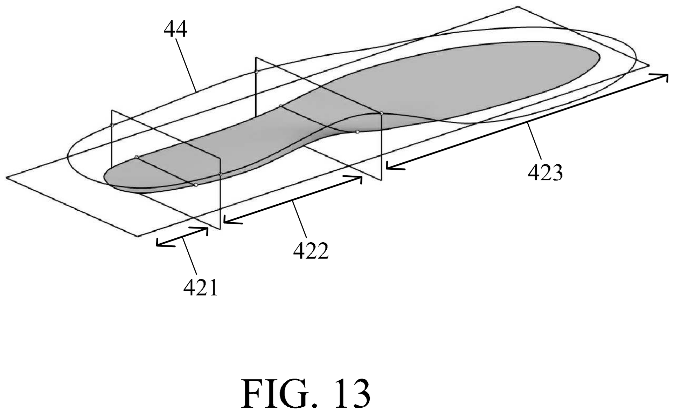

Referring to FIGS. 6, 11 and 12, in sub-step S36, the computing unit divides the upper contour line 42 of the footwear template digital model 4, starting from the heel feature point and extending forward, into a rear heel region 421, an arch region 422, and a forefoot region 423. The computing unit projects a first portion of the upper contour line 42 corresponding to the rear heel region 421 onto the reference plane P to obtain a projected contour, and moves the projected contour upward along the vertical direction Z by a footwear rearfoot opening height (see FIG. 12) to obtain a moved first portion of the upper contour line 42. The computing unit then adjusts a second portion of the upper contour line 42 corresponding to the arch region 422 so as to be smoothly connected with the moved first portion of the upper contour line 42 corresponding to the rear heel region 421, and connects a third portion of the upper contour line 42 corresponding to the forefoot region 423 to form a footwear opening line 44 (see FIG. 13). In this embodiment, the footwear rearfoot opening height is, for example, 12 mm, but is not limited thereto.

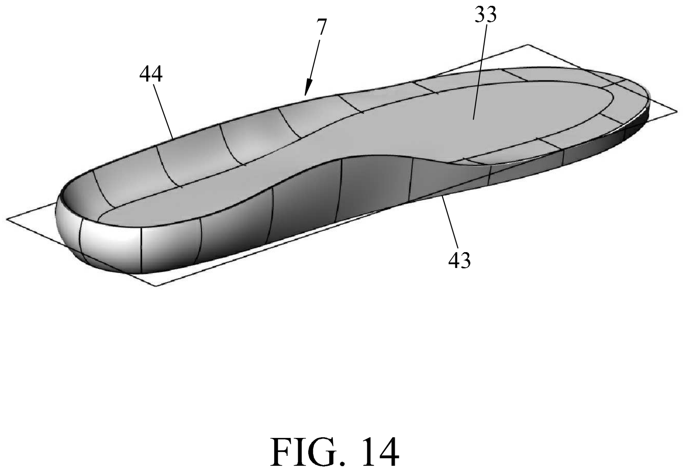

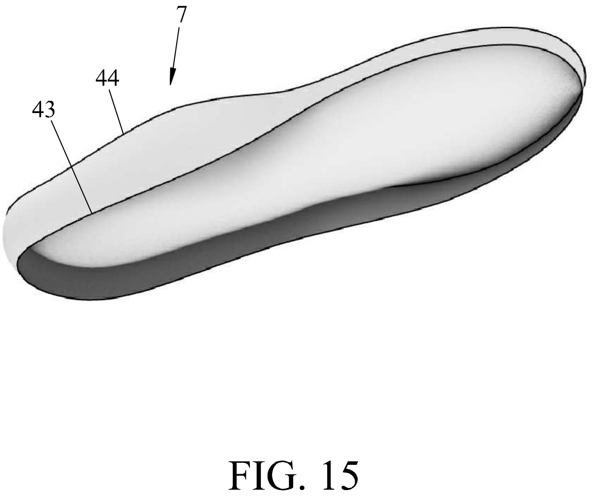

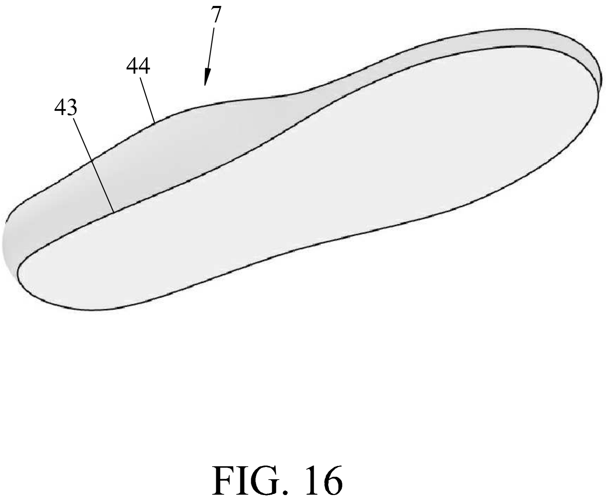

Referring to FIGS. 6 and 14, in sub-step S37, the computing unit constructs a footwear shell model 7 based on the central surface 33, the footwear opening line 44 and the lower contour line 43. In this embodiment, a surface between the footwear opening line 44 and the lower contour line 43 of the footwear template digital model 4 is formed as a curved surface using a dual-rail sweep technique, but is not limited thereto. Referring to FIGS. 15 and 16, after the surface between the footwear opening line 44 and the lower contour line 43 of the footwear template digital model 4 is constructed (see FIG. 15), a bottom-closing operation is subsequently performed to complete the footwear shell model 7 (see FIG. 16).

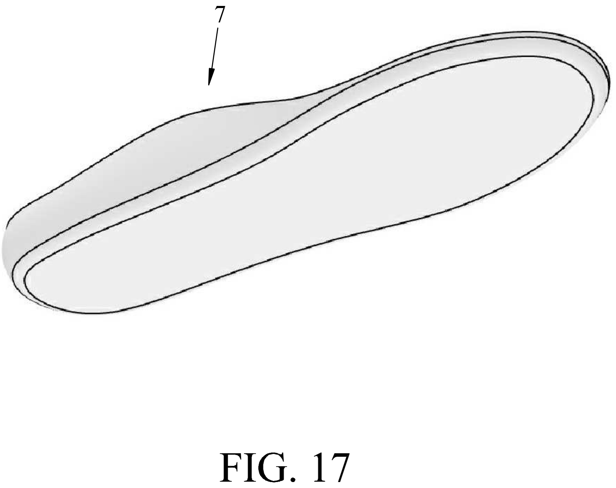

Referring to FIGS. 6 and 17, in sub-step S38, the computing unit performs rounding operation on a bottom outer peripheral edge of the footwear shell model 7.

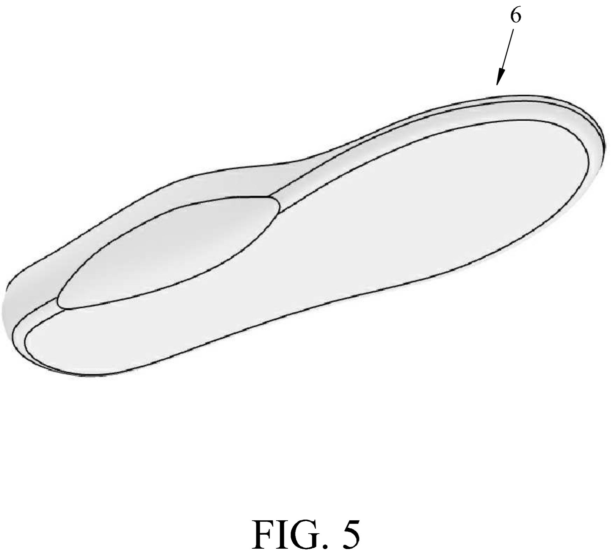

Referring to FIGS. 5 and 6, in sub-step S39, the computing unit removes an arch portion of the footwear shell model 7 (see FIG. 17) to form the preliminary digital model 6 of the footwear article. The purpose of removing the arch portion is to provide elasticity in an upper region corresponding to the removed arch portion in a subsequently formed product, thereby enhancing versatility of the finished product.

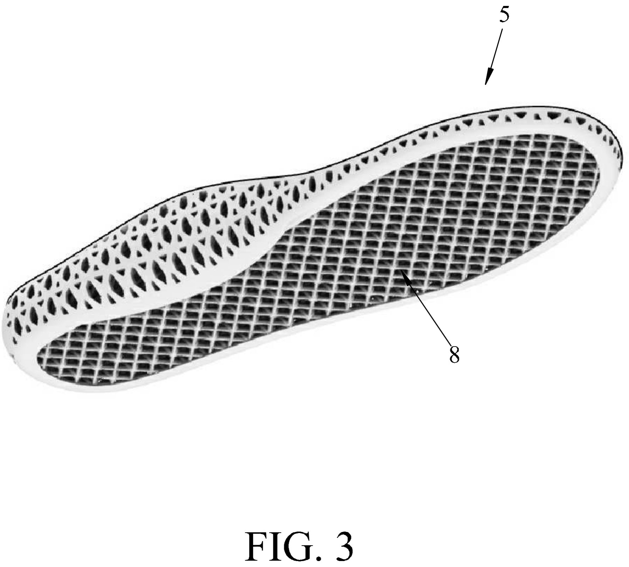

Referring to FIGS. 3, 4 and 5, in step S4, the computing unit modifies an external shape of the preliminary digital model 6 of the footwear article and adds a microstructure 8 to the preliminary digital model 6 of the footwear article for enhancing support, thereby generating a (modified) digital model 5 of the footwear article. In accordance with some embodiments, the microstructure 8 may be formed of a combination of structural lines or surface-based structural elements that interconnect with each other. Parameters of the microstructure 8 include length, width, height, a line diameter of the structural lines, or a thickness of the surface-based structural elements.

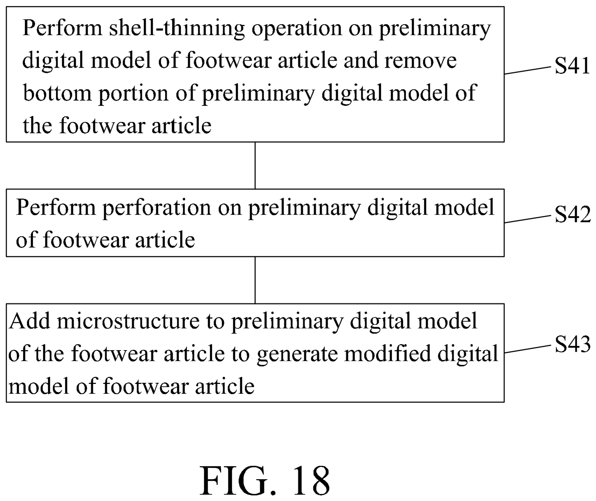

Referring to FIGS. 4 and 18, step S4 includes sub-steps S41 to S43.

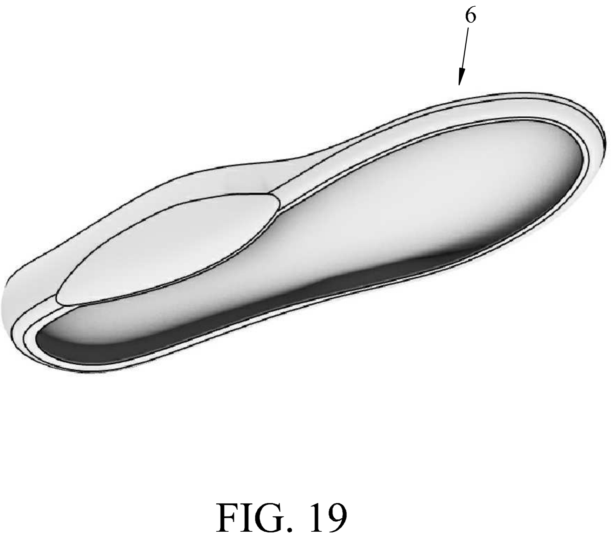

Referring to FIGS. 5, 18 and 19, in sub-step S41, the computing unit performs a shell-thinning operation on the preliminary digital model 6 of the footwear article and removes a bottom portion of the preliminary digital model 6 of the footwear article (see FIG. 19). In this embodiment, removing the bottom portion of the preliminary digital model 6 of the footwear article is performed after the preliminary digital model 6 of the footwear article has been thinned by the shelling-thinning operation. For example, when a resultant thickness of the shell-thinning operation is set to 1.3 mm, a depth of the bottom removal is also 1.3 mm, such that the preliminary digital model 6 of the footwear article forms a downwardly open hollow structure.

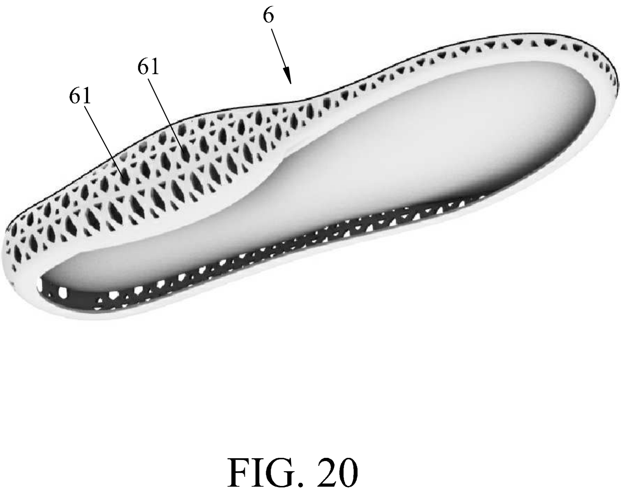

Referring to FIGS. 18 and 20, in sub-step S42, the computing unit performs perforation on the preliminary digital model 6 of the footwear article to form a plurality of through-holes 61 in the preliminary digital model 6 of the footwear article. In this embodiment, the perforation refers to forming the through holes 61 on a surface of the preliminary digital model 6 of the footwear article after the shell-thinning operation has been performed, thereby providing ventilation and facilitating removal of debris generated during manufacturing.

Referring to FIGS. 3, 18 and 20, in sub-step S43, the computing unit adds the microstructure 8 to the preliminary digital model 6 of the footwear article (see FIG. 20) based on the set of comfort parameters, thereby generating the digital model 5 of the footwear article (see FIG. 3). In this embodiment, the computing unit adjusts the line diameters of the structural lines corresponding to different regions of the microstructure 8 based on the forefoot hardness parameter, the midfoot hardness parameter, and the rearfoot hardness parameter, and adds the microstructure 8 to the preliminary digital model 6 of the footwear article to thereby adjust support and comfort of a subsequently formed product.

Referring to FIGS. 1 and 3, since the digital model 5 of the footwear article is generated based on the foot scan model 2, the set of feature point parameters, and the set of comfort parameters, and the sets of feature point parameters comfort parameters are established by medical personnel according to professional medical experience, the product formed by 3D printing and laser sintering according to the digital model 5 of the footwear article would be suitable for corrective use by the user. If adjustment is required before fabrication of the product, the digital model 5 of the footwear article can be rapidly regenerated by modifying values of the feature point parameters and the comfort parameters, thereby allowing medical personnel to immediately review and further adjust the model. In addition, incorporation of the microstructure 8 further enhances structural support, thereby improving wearing comfort for the user.

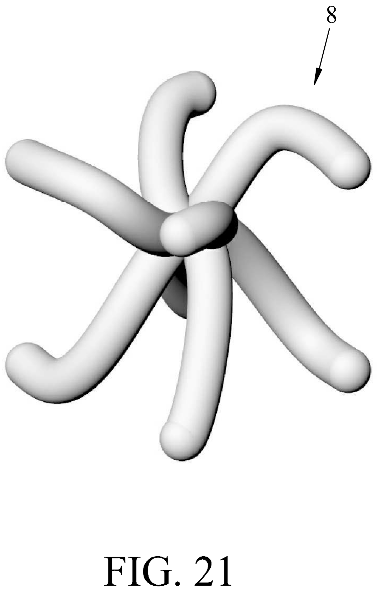

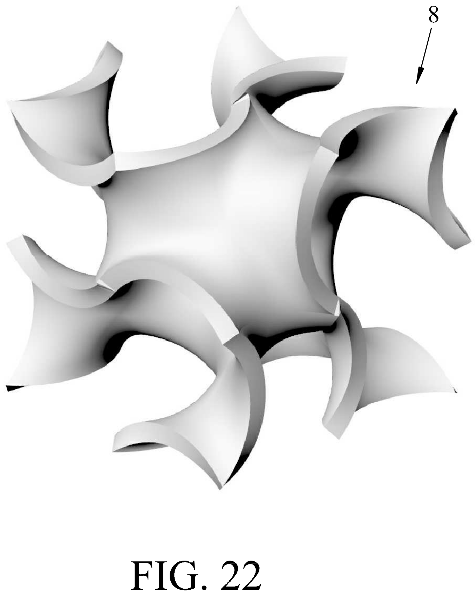

In this embodiment, the microstructure 8 is formed of a combination of structural lines as shown in FIG. 21. In some embodiments, the microstructure 8 may be formed of a combination of surface-based structural elements as shown in FIG. 22.

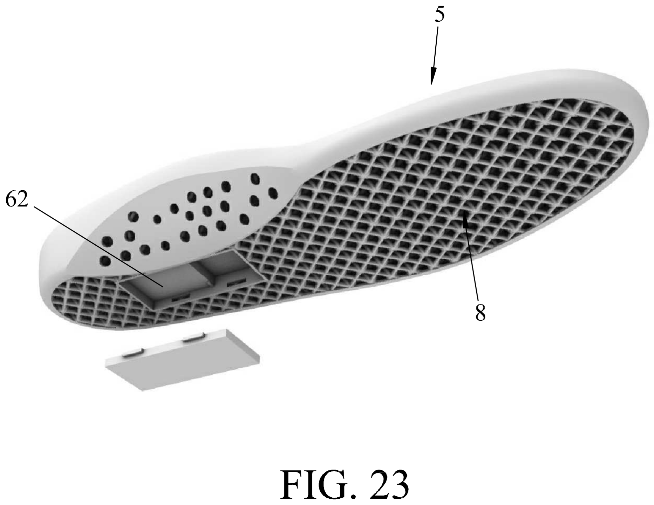

Referring to FIG. 23, in some embodiments, the digital model 5 of the footwear article may be additionally provided with a detachable mounting box structure 62. The mounting box structure 62, after physical fabrication, may be configured to accommodate a sensing chip capable of providing information such as time and gait data. Accordingly, the finished product may be able to transmit sensing results to medical personnel as a reference for evaluating corrective effectiveness.

In summary, the computing unit calculates and generates the digital model 5 of the footwear article having the microstructure 8 based on the foot scan model 2, the set of feature point parameters, and the set of comfort parameters, thereby facilitating review and adjustment by medical personnel and enabling subsequent fabrication of a finished product through 3D printing, which improves convenience of use.

In the description above, for the purposes of explanation, numerous specific details have been set forth in order to provide a thorough understanding of the embodiment(s). It will be apparent, however, to one skilled in the art, that one or more other embodiments may be practiced without some of these specific details. It should also be appreciated that reference throughout this specification to "one embodiment," "an embodiment," an embodiment with an indication of an ordinal number and so forth means that a particular feature, structure, or characteristic may be included in the practice of the disclosure. It should be further appreciated that in the description, various features are sometimes grouped together in a single embodiment, figure, or description thereof for the purpose of streamlining the disclosure and aiding in the understanding of various inventive aspects; such does not mean that every one of these features needs to be practiced with the presence of all the other features. In other words, in any described embodiment, when implementation of one or more features or specific details does not affect implementation of another one or more features or specific details, said one or more features may be singled out and practiced alone without said another one or more features or specific details. It should be further noted that one or more features or specific details from one embodiment may be practiced together with one or more features or specific details from another embodiment, where appropriate, in the practice of the disclosure.

## Claims

1. A method for developing a footwear article, **characterized by** steps of:
A) by a computing unit, receiving a foot scan model (2) corresponding to an external shape of a foot, and a set of feature point parameters corresponding to the foot scan model (2);
B) by the computing unit, receiving a set of comfort parameters corresponding to the foot scan model (2);
C) by the computing unit, calculating and generating a preliminary digital model (6) of the footwear article based on the foot scan model (2), the set of feature point parameters, and the set of comfort parameters;
D) by the computing unit, modifying an external shape of the preliminary digital model (6) of the footwear article and adding a microstructure (8) to the preliminary digital model (6) of the footwear article for enhancing support, thereby generating a modified digital model (5) of the footwear article; and
E) manufacturing the footwear article based on the modified digital model (5) of the footwear article.

2. The method as claimed in claim 1, wherein the foot scan model (2) includes a forefoot portion (21), and the set of feature point parameters includes a heel feature point and an arch feature point,
wherein step C) includes sub-steps of:
C1) generating a footwear template digital model (4) based on the set of comfort parameters, wherein the footwear template digital model (4) includes a footbed region (41) corresponding to a stepping area of the forefoot portion (21), an upper contour line (42) disposed above the footbed region (41), and a lower contour line (43) disposed below the footbed region (41);
C2) generating a plantar digital model (3) corresponding to a region below the foot scan model (2) based on the foot scan model (2) and the set of comfort parameters, wherein the plantar digital model (3) includes a footbed region (31) corresponding to the stepping area of the forefoot portion (21) and being coplanar with the footbed region (41) of the footwear template digital model (4) along a reference plane (P), and a contour line (32);
C3) translating the footwear template digital model (4) and the plantar digital model (3) along the reference plane (P) such that positions corresponding to heel feature points of the footwear template digital model (4) and the plantar digital model (3) coincide with each other when projected onto the reference plane (P); and
C4) adjusting the upper contour line (42) of the footwear template digital model (4) by changing a position thereof along a vertical direction, while the lower contour line (43) of the footwear template digital model (4) remains unchanged during the adjustment.

3. The method as claimed in claim 2, wherein, in sub-step C4), the position of the upper contour line (42) of the footwear template digital model (4) is adjusted along the vertical direction such that a distance between the position and the reference plane (P) along the vertical direction ranges from 10 mm to 30 mm, while the lower contour line (43) of the footwear template digital model (4) remains unchanged during the adjustment.

4. The method as claimed in claim 2 or 3, wherein the foot scan model (2) is obtained by scanning the foot with a foot scanner after aligning the foot using two laser level instruments, one of the laser level instruments being aligned with a second metatarsal of the foot, and the other of the laser level instruments being aligned with a central axis of a heel of the foot, thereby improving scanning accuracy.

5. The method as claimed in any one of claims 2 to 4, wherein step C) further includes a sub-step of:
C5) offsetting the upper contour line (42) of the footwear template digital model (4) thus adjusted inward by a predetermined reduction distance, using the upper contour line thus offset as a shaping line (45), and designating a region of the plantar digital model (3) extracted in correspondence to the shaping line (45) as a central surface (33) of the plantar digital model (3).

6. The method as claimed in any one of claims 2 to 5, further comprising: by the computing unit, constructing a footwear shell model (7) based on the footwear template digital model (4) and the plantar digital model (3), wherein step C) further includes sub-steps of:
C6) performing rounding operation on the footwear shell model (7); and
C7) removing an arch portion of the footwear shell model (7) to form the preliminary digital model (6) of the footwear article.

7. The method as claimed in any one of the preceding claims, wherein step D) includes sub-steps of:
D1) performing a shell-thinning operation on the preliminary digital model (6) of the footwear article and removing a bottom portion of the preliminary digital model (6) of the footwear article;
D2) performing perforation on the preliminary digital model (6) of the footwear article to form a plurality of through-holes (61) in the preliminary digital model (6) of the footwear article; and
D3) adding the microstructure (8) to the preliminary digital model (6) of the footwear article based on the set of comfort parameters.

8. The method as claimed in claim 7, wherein the set of comfort parameters includes a forefoot hardness parameter, a midfoot hardness parameter, and a rearfoot hardness parameter, and the microstructure (8) is formed of a combination of structural lines that interconnect with each other, and
wherein, in sub-step D3), the computing unit adjusts line diameters of the structural lines corresponding to different regions of the microstructure (8) based on the forefoot hardness parameter, the midfoot hardness parameter, and the rearfoot hardness parameter, and adds the microstructure (8) to the preliminary digital model (6) of the footwear article.

9. The method as claimed in any one of claims 2 to 6, wherein the set of comfort parameters includes a transverse arch pad type parameter, a transverse arch pad protrusion height parameter, a transverse arch pad lateral displacement parameter, and a transverse arch pad axial displacement parameter, and
wherein, in sub-step C2), the computing unit generates the plantar digital model (3) that corresponds to the region below the foot scan model (2) based on the foot scan model (2), the transverse arch pad type parameter, the transverse arch pad protrusion height parameter, the transverse arch pad lateral displacement parameter, and the transverse arch pad axial displacement parameter.

10. The method as claimed in any one of claims 2 to 6 and 9, wherein the set of comfort parameters includes a rearfoot medial-lateral wedge angle parameter, and
wherein, in sub-step C2), the computing unit generates the plantar digital model (3) that corresponds to the region below the foot scan model (2) based on the rearfoot medial-lateral wedge angle parameter.

11. The method as claimed in any one of the preceding claims, wherein an external shape of the modified digital model (5) of the footwear article corresponds to an external shape of an insole.

12. The method as claimed in any one of the preceding claims, wherein an external shape of the modified digital model (5) of the footwear article corresponds to an external shape of a midsole.
